# EUROPÄISCHE PATENTSCHRIFT

(11) **EP 0 883 522 B1**
(45) Veröffentlichungstag und Bekanntmachung des Hinweises auf die Patenterteilung: **19.01.2000**
(21) Anmeldenummer: 96945517.9
(22) Anmeldetag: 10.10.1996
(51) Int. Cl.: B60R 21/13

(54) **VERFAHREN UND ANORDNUNG ZUM ERKENNEN EINES FAHRZEUG-ÜBERSCHLAGS**
METHOD AND ARRANGEMENT FOR DETECTING A VEHICLE ROLL-OVER
PROCEDE ET DISPOSITIF POUR DETECTER LE CAPOTAGE D'UN VEHICULE

(30) Priorität: 11.03.1996 DE 19609176
(43) Veröffentlichungstag der Anmeldung: 16.12.1998
(73) Patentinhaber: ROBERT BOSCH GMBH, 70442 Stuttgart (DE)
(72) Erfinder: MATTES, Bernhard, D-74343 Sachsenheim (DE); SEYFANG, Walter, D-71691 Freiberg (DE); HENNE, Michael, D-74374 Zaberfeld (DE)
(86) Internationale Anmeldenummer: DE9601997
(87) Internationale Veröffentlichungsnummer: WO9733774

(56) Entgegenhaltungen:
- EP-A- 0 364 965
- EP-A- 0 430 813
- EP-A- 0 528 514
- EP-A- 0 662 601
- EP-A- 0 709 255
- DE-C- 3 825 088
- PATENT ABSTRACTS OF JAPAN vol. 018, no. 478 (P-1796), 6.September 1994 & JP 06 160525 A (OLYMPUS OPTICAL CO LTD), 7.Juni 1994,

## Beschreibung

### Stand der Technik

Falls es zu einem Überschlag eines Fahrzeugs kommt, müssen rechtzeitig alle im Fahrzeug installierten Insassen-Schutzvorrichtungen ausgelöst werden, dazu gehören beispielsweise Überrollbügel, Gurtstraffer, Front- und Seitenairbags, Schwingsitzarretierung bei einem LKW, etc. Damit all diese Schutzvorrichtungen rechtzeitig ausgelöst werden können, muß möglichst früh erkannt werden, ob Beschleunigungen des Fahrzeugs in Richtung seiner Hochachse (Gierachse), seiner Längsachse (Wankachse) und seiner Querachse (Nickachse) zu einem Überschlag führen werden. Damit die Insassenschutzvorrichtungen auch wirklich nur bei einem Überschlag ausgelöst werden, sollten Fehlerkennungen von Überschlägen möglichst weitgehend ausgeschlossen werden.

Aus der DE 36 04 216 C2 ist ein Überrollsensor bekannt, bestehend aus einem mit einem Fluid gefüllten Raum, in dem sich als seismische Masse ein nach Art eines Pendels aufgehängter Körper befindet. Aus der Lageänderung des Pendels, das in allen Richtungen ausschlagen kann, wird mit Hilfe einer elektrischen Auswerteschaltung eine Information darüber gewonnen, ob das Fahrzeug sich überschlägt oder nicht. Dieser auf dem Pendelprinzip beruhende Überrollsensor hat den Nachteil, daß er zu träge auf die Fahrzeugbewegungen reagiert, so daß eventuell ein Überschlag zu spät für das Auslösen der Insassenschutzvorrichtungen signalisiert wird.

Aus der EP 0 430 813 A1 ist ein Sicherheitssystem für ein Fahrzeug bekannt, das bei einem Fahrzeugüberschlag einen Überrollbügel ausfährt. Um einen Überrollvorgang erfassen zu können, besitzt das System Beschleunigungssensoren zur Messung der Beschleunigungen des Fahrzeugs in die Richtungen seiner Gierachse, seiner Wankachse und seiner Nickachse und es hat mindestens einen Drehratensensor, der die Winkelgeschwindigkeit des Fahrzeugs (FZ) bezüglich seiner Wankachse mißt.

Der Erfindung liegt die Aufgabe zugrunde, ein Verfahren und eine Anordnung zum Erkennen eines Fahrzeug-Überschlags anzugeben, womit ein Überschlag rechtzeitig und mit großer Zuverlässigkeit erkannt wird.

### Vorteile der Erfindung

Gemäß Anspruch 6 besteht eine Anordnung zum Erkennen eines Fahrzeug-Überschlages aus mehreren Beschleunigungssensoren, welche die Beschleunigungen des Fahrzeugs in Richtung und seiner Gierachse, seiner Wankachse und seiner Nickachse messen und aus mindestens einem Drehratensensor, der die Winkelgeschwindigkeit des Fahrzegs bezüglich seiner Wankachse und evtl. zusätzlich bezüglich seiner Nickachse mißt. Weiterhin sind Mittel vorgesehen, welche aus den drei gemessenen Beschleunigungswerten einen Beschleunigungsvektor berechnen und, wenn die Winkelablage des Beschleunigungsvektors gegenüber dem Erdbeschleunigungsvektor in Ruhelage des Fahrzeugs einen vorgebbaren Grenzwert überschreitet, einen Überschlag signalisieren, wobei die Mittel einen umso niedrigeren Grenzwert vorgeben, je größer die vom Drehratensensor gemessene Winkelgeschwindigkeit ist.

Nach Anspruch 1 werden zum Erkennen eines Fahrzeug-Überschlags folgende Verfahrensschritte durchgeführt: Mit den Beschleunigungssensoren werden die Beschleunigungen des Fahrzeugs in die Richtungen seiner Gierachse, seiner Wankachse und seiner Nickachse gemessen. Dann wird aus den drei gemessenen Beschleunigungswerten ein Beschleunigungsvektor berechnet. Wenn die Winkelablage des Beschleunigungsvektors gegenüber dem Beschleunigungsvektor in Ruhelage des Fahrzeugs einen vorgebbaren Grenzwert überschreitet, wird ein Überschlag signalisiert. Für die Winkelablage des Beschleunigungsvektors wird ein umso niedrigerer Grenzwert vorgegeben, je größer die von mindestens einem Drehratensensor gemessene Winkelgeschwindigkeit bezüglich der Wankachse und evtl. zusätzlich bezüglich der Nickachse ist.

Es kann allein die von dem Drehratensensor gemessene Winkelgeschwindigkeit als Kriterium für die Erkennung eines Überschlages verwendet werden, falls keine Meßwerte der Beschleunigungssensoren vorliegen.

Zweckmäßige Weiterbildungen der Erfindung gehen aus den Unteransprüchen hervor.

### Beschreibung eines Ausführungsbeispiels

### Anhand eines in der Zeichnung dargestellten

Ausführungsbeispiels wird nachfolgend die Erfindung näher erläutert. Es zeigen:
Figur 1 eine schematische Darstellung eines Fahrzeugs mit seinen drei Achsen und Beschleunigungssensoren und Drehratensensoren,
Figur 2 einen Projektionskegel für den Beschleunigungsvektor und
Figur 3 ein Ablaufdiagramm für das erfindungsgemäße Verfahren.

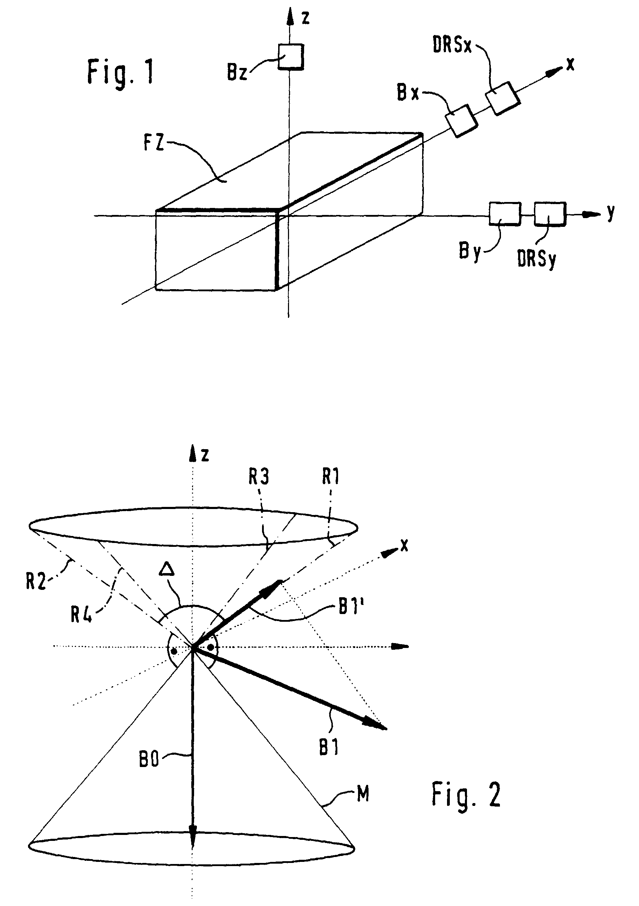

In der Figur 1 ist schematisch ein Fahrzeug FZ dargestellt und ein dazugehörendes orthogonales Achsensystem, mit einer Gierachse z, einer Wankachse x und einer Nickachse y. In dem Fahrzeug FZ sind drei Beschleunigungssensoren installiert. Der erste Beschleunigungssensor Bz mißt die Beschleunigung des Fahrzeugs in Richtung der Gierachse z, der zweite Beschleunigungssensor Bx mißt die Beschleunigung in Richtung der Wankachse x und der dritte Beschleunigungssensor By mißt die Beschleunigung in Richtung der Nickachse y. Um alle drei Beschleunigungskomponenten messen zu können, ist man nicht unbedingt darauf angewiesen, drei getrennte Beschleunigungssensoren vorzusehen. Sofern durch geeignete Anordnung von weniger als drei Beschleunigungssensoren alle drei Beschleunigungskomponenten gemessen weden können, ist auch der Einsatz anderer Beschleunigungssensor-Systeme möglich. Außerdem ist mindestens ein Drehratensensor DRSx im Fahrzeug installiert, welcher die Winkelgeschwindigkeit des Fahrzeugs um die Wankachse x mißt. Zusätzlich kann auch noch ein zweiter Drehratensensor DRSy vorgesehen werden, der die Winkelgeschwindigkeit des Fahrzeugs um die Nickachse y mißt. Da Überschläge des Fahrzeugs in der Regel um die Wankachse x stattfinden, kann eventuell auf den zweiten Drehratensensor DRSy verzichtet werden.

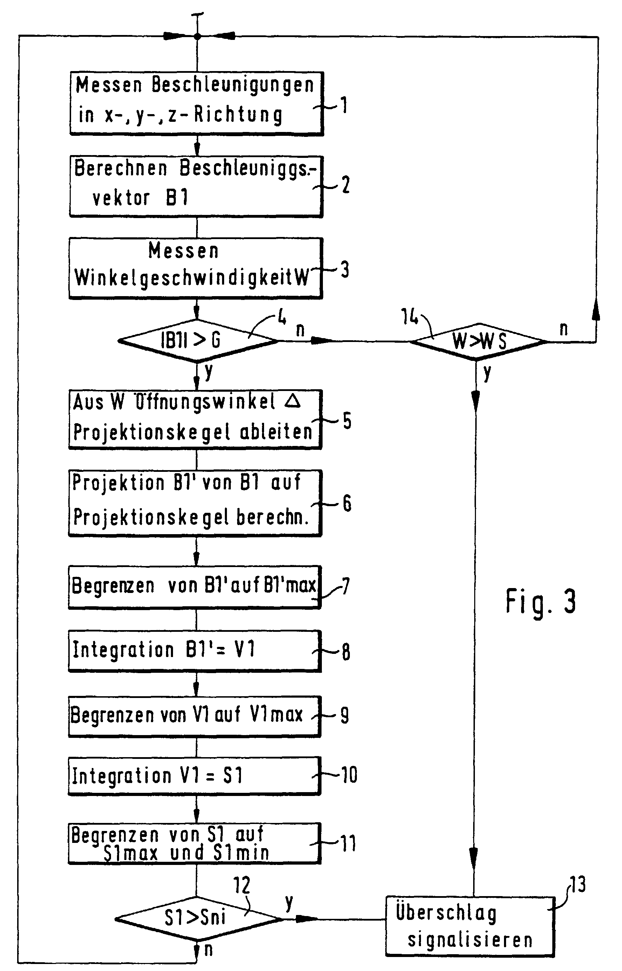

In der Figur 3 ist ein Verfahrensablauf dargestellt, nach dem aus den Meßwerten der Beschleunigungssensoren Bz, Bx, By und dem mindestens einen Drehratensensor DRSx eine Information darüber abgeleitet wird, ob es zu einem Überrollen des Fahrzeugs kommt oder nicht. Im Verfahrensschritt 1 werden zunächst mittels der Beschleunigungssensoren Bz, Bx, By die Beschleunigung des Fahrzeugs in x-, y- und z-Richtung gemessen. Aus diesen Beschleunigungskomponenten wird im Verfahrensschritt 2 ein resultierender Beschleunigungsvektor B1 berechnet, der eine bestimmte Richtung und eine bestimmte Länge aufweist.

In der Figur 2 ist ein dreiachsiges (x, y, z) Projektionsschema dargestellt, in dem der berechnete resultierende Beschleunigungsvektor B1 eingezeichnet ist. Der in der z-Achse liegende Beschleunigungsvektor B0 ist der Erdbeschleunigungsvektor, den man mit den Beschleunigungssensoren Bz, Bx und By mißt, wenn das Fahrzeug selbst keine Trägheitsbeschleunigungen aufweist, sich also im Ruhezustand befindet oder sich gleichförmig bewegt. Erfährt nun das Fahrzeug eine Trägheitsbeschleunigung, so wird der Beschleunigungsvektor aus seiner Ruhelage (B0) herausgeschwenkt (z.B. B1). Ein in Figur 2 eingezeichneter Kegel mit der Mantelfläche M, dessen Spitze im Zentrum des Koordinatensystems liegt und dessen Rotationsachse die z-Achse ist, begrenzt den Bereich für den Ausschlag des Beschleunigungsvektors, indem sich das Fahrzeug in einer stabilen Lage befindet. Erst wenn der Beschleunigungsvektor B1, wie in Figur 2 angedeutet, über die Mantelfläche M des Kegels hinausschwenkt, ist mit einem Überschlag des Fahrzeugs zu rechnen.

Neben den Beschleunigungskomponenten wird außerdem von mindestens einem Drehratensensor die Winkelgeschwindigkeit W des Fahrzeugs um eine Achse (vorzugsweise die Wankachse x) gemessen (Verfahrensschritt 3). Falls im Verfahrensschritt 4 festgestellt wird, daß der Betrag des resultierenden Beschleunigungsvektors |B1|>G ist (G liegt im Bereich von 0 bis z.B. dem 0.05 fachen der Erdbeschleunigung g), wird im nächsten Verfahrensschritt 5 aus der gemessenen Winkelgeschwindigkeit W ein Öffnungswinkel Δ für einen in Figur 2 eingezeichneten Projektionskegel abgeleitete. Der Projektionskegel stellt ein Hilfsmittel dar für die Ableitung einer Überschlags-Information. Seine Rotationsachse ist ebenfalls die z-Achse, seine Spitze liegt ebenfalls im Zentrum des Koordinatensystems und seine Mantelfläche ist orthogonal orientiert zu der Mantelfläche M des den stabilen Bereich des Fahrzeug begrenzenden Kegels.

Je größer die im Verfahrensschritt 3 gemessene Winkelgeschwindigkeit W ist, desto kleiner muß der Öffnungswinkel des den stabilien Bereich des Fahrzeugs begrenzenden Kegels mit der Mantelfläche M sein, und desto größer wird der Öffnungswinkel Δ des Projektionskegels. Denn bei einer hohen Winkelgeschwindigkeit W kann auch schon bei einem kleineren Ausschlagwinkel des Beschleunigungsvektors B1 mit einem Überschlag des Fahrzeugs gerechnet werden. Der Zusammenhang zwischen der Winkelgeschwindigkeit W und dem Öffnungswinkel Δ des Projektionskegels ist also empirisch zu ermitteln.

Im Verfahrensschritt 6 wird die Projektion des Beschleunigungsvektors B1 auf den Projektionskegel berechnet, und zwar werden von dem Beschleunigungsvektor B1 die Projektionen in mehrere Richtungen R1, R2, R3, R4 berechnet. In der Figur 2 ist nur eine Projektion B1' in die Richtung R1 beispielhaft dargestellt. Für die Berechnung einer Überschlags-Information ist nur diese Projektion B1', also die senkrecht auf der Mantelfläche M des den stabilen Bereich des Fahrzeugs begrenzenden Kegels stehende Komponente des Beschleunigungsvektors B1 maßgebend. Die in der Mantelfläche M des Kegels liegende Komponente des Beschleunigungsvektors B1 hat keinen Einfluß auf den Überschlag des Fahrzeugs. Deshalb wird in den weiteren Verfahrensschritten ausschließlich die Projektion B1' des Beschleunigungsvektors B1 zu der Überschlags-Information weiterverarbeitet.

Im Verfahrensschritt 7 wird die Projektion B1' auf einen maximalen Wert B1'max begrenzt. Diese Begrenzung erfolgt deshalb, weil extrem große Beschleunigungen, die über den Wert B1'max hinausgehen, nicht zu einem Überschlag des Fahrzeugs führen. Solche Beschleunigungseinflüsse können beispielsweise beim Überfahren eines Bordsteins oder einer plötzlichen Unebenheit in der Fahrbahn entstehen. Ohne die besagte Begrenzung würde das System auf Grund der sehr hohen Beschleunigung einen Überschlag vorhersagen, obwohl es in der Realität nicht zu einem Überschlag kommt.

Im nächsten Verfahrensschritt 8 wird die begrenzte Projektion B1' des Beschleunigungsvektors B1 integriert, so daß man zu einer Geschwindigkeit V1 gelangt. Auch diese Geschwindigkeit V1 wird im Verfahrensschritt 9 auf einen maximalen Wert V1max aus den gleichen Gründen wie die Beschleunigung B1' im Verfahrensschritt 7 beschränkt. Anschließend wird im Verfahrensschritt 10 die Geschwindigkeit V1 integriert, so daß man eine Strecke S1 erhält. Auch diese Strecke S1 wird im Verfahrensschritt 11, wie schon die Geschwindigkeit V1 und die Beschleunigung B1', auf einen maximalen Wert S1max begrenzt. Zusätzlich wird die Strecke S1 auf einen minimalen Wert S1min (z.B. 0) begrenzt. Übersteigt die Strecke S1 eine empirisch ermittelte Länge Sn1 (Verfahrensschritt 12), so wird ein Überschlag signalisiert (Verfahrensschritt 13). Bleibt aber die Strecke S1 unterhalb der Länge Sn1, so wird die gesamte zuvor beschriebene Prozedur erneut durchlaufen.

Wie bereits erwähnt, werden die Projektionen des Beschleunigungsvektors B1 in mehreren Richtungen R1, R2, R3, R4 betrachtet und aus allen eine Strecke abgeleitet. Sobald nur eine dieser ermittelten Strecken den Grenzwert Sni (i=1,2,3,...) überschreitet, wird ein Überschlag signalisiert, was ein Auslösen der Sicherheitsvorrichtungen zur Folge hat.

Falls das Fahrzeug abhebt und den Bodenkontakt verliert und es dabei zu einem Überschlag kommen sollte, würden die Beschleunigungssensoren Bz, Bx, By allenfalls sehr kleine Beschleunigungen messen können. In diesem Falle würde im Anschluß an den Verfahrensschritt 4 in einem Verfahrensschritt 14 abgefragt, ob die gemessene Winkelgeschwindigkeit W größer als eine vorgegebene impirisch ermittelte Schwelle WS ist. Ist das tatsächlich der Fall, so ist davon auszugehen, daß es zu einem Überschlag des Fahrzeugs kommt. Entsprechend ist ein Überschlag zu signalisieren (Verfahrensschritt 13). Bleibt dagegen die gemessene Winkelgeschwindigkeit W unterhalb des Schwellwertes WS, so beginnt die Verfahrensprozedur von neuem.

## Patentansprüche

1. Verfahren zum Erkennen eines Fahrzeug-Überschlags, dadurch gekennzeichnet,
- daß mit Hilfe von Beschleunigungssensoren (Bx, By, Bz) die Beschleunigungen des Fahrzeugs (FZ) in die Richtungen seiner Gierachse (z), seiner Wankachse (x) und seiner Nickachse (y) gemessen werden,
- daß aus den drei gemessenen Beschleunigungswerten ein resultierender Beschleunigungsvektor (B1) berechnet wird,
- daß, wenn die Winkelablage des Beschleunigungsvektors (B1) gegenüber dem Beschleunigungsvektor (B0) in Ruhelage des Fahrzeugs (FZ) einen vorgebbaren Grenzwert überschreitet, ein Überschlag signalisiert wird,
- und daß für die Winkelablage des Beschleunigungsvektors (B1) ein umso niedrigerer Grenzwert vorgegeben wird, je größer die von mindestens einem Drehratensensor (DRSx, DRSy) gemessene Winkelgeschwindigkeit bezüglich der Wankachse (x) und evtl. zusätzlich bezüglich der Nickachse (y) ist.

2. Verfahren nach Anspruch 1, dadurch gekennzeichnet, daß allein aus der vom Drehratensensor (DRSx, DRSy) gemessenen Winkelgeschwindigkeit ein Kriterium für die Erkennung eines Überschlages abgeleitet wird, falls keine Meßwerte der Beschleunigungssensoren (Bx, By, Bz) vorliegen.

3. Verfahren nach Anspruch 1, dadurch gekennzeichnet, daß Projektionen (B1') des Beschleunigungsvektors (B1) in mehrere Richtungen (R1, R2, R3) berechnet werden, daß jede Projektion (B1') des Beschleunigungsvektors (B1) zweimal integriert wird und daß, wenn einer der zweimal integrierten Projektionen (B1') eine richtungsabhängige Schwelle (Sn1) überschreitet, ein Überschlag signalisiert wird.

4. Verfahren nach Anspruch 3, dadurch gekennzeichnet, daß die Projektionen (B1') des Beschleunigungsvektors (B1) auf Grenzbeschleunigungswerte begrenzt werden, oberhalb derer keine zu einem Überschlag führende Beschleunigung des Fahrzeugs (Fz) vorliegt.

5. Verfahren nach Anspruch 3, dadurch gekennzeichnet, daß die aus der ersten und/oder zweiten Integration der Projektionen (B1') des Beschleunigungsvektors (B1) resultierenden Signale auf Werte begrenzt werden, oberhalb derer es nicht zu einem Überschlag des Fahrzeugs (FZ) kommt.

6. Anordnung zum Erkennen eines Fahrzeug-Überschlags, welche Beschleunigungssensoren (Bx, By, Bz) aufweist zur Messung der Beschleunigungen des Fahrzeugs (FZ) in die Richtungen seiner Gierachse (z), seiner Wankachse (x) und seiner Nickachse (y) und mindestens einen Drehratensensor (DRSx, DRSy) besitzt, der die Winkelgeschwindigkeit des Fahrzeugs (FZ) bezüglich seiner Wankachse (x) und evtl. zusätzlich bezüglich seiner Nickachse (y) mißt, dadurch gekennzeichnet, daß Mittel vorgesehen sind, welche aus den drei gemessenen Beschleunigungswerten einen Beschleunigungsvektor (B1) berechnen und, wenn die Winkelablage des Beschleunigungsvektors (B1) gegenüber dem Erdbeschleunigungsvektor (B0) in Ruhelage des Fahrzeugs (FZ) einen vorgebbaren Grenzwert überschreitet, einen Überschlag signalisieren, und daß die Mittel einen umso niedrigeren Grenzwert vorgeben, je größer die vom Drehratensensor (DRSx, DRSy) gemessene Winkelgeschwindigkeit ist.

7. Anordnung nach Anspruch 6, dadurch gekennzeichnet, daß Mittel vorgesehen sind, welche aus den drei gemessenen Beschleunigungswerten einen Beschleunigungsvektor (B1) berechnen und, wenn die Winkelablage des Beschleunigungsvektors (B1) gegenüber dem Erdbeschleunigungsvektor (B0) in Ruhelage des Fahrzeugs (FZ) einen vorgebbaren Grenzwert überschreitet, einen Überschlag signalisieren, und daß die Mittel einen umso niedrigeren Grenzwert vorgeben, je größer die vom Drehratensensor (DRSx, DRSy) gemessene Winkelgeschwindigkeit ist.

## Claims

1. Method of detecting overturning of a vehicle, characterized in
- that the accelerations of the vehicle (FZ) in the directions of its yaw axis (z), its roll axis (x) and its pitch axis (y) are measured by means of acceleration sensors (Bx, By, Bz),
- that a resulting acceleration vector (B1) is calculated from the three measured acceleration values,
- that overturning is signalled if the amount of angular deviation of the acceleration vector (B1) relative to the acceleration vector (B0) in the equilibrium position of the vehicle (FZ) exceeds a predeterminable limit value, and
- that the limit value which is predetermined for the amount of angular deviation of the acceleration vector (B1) is the lower, the greater is the angular velocity with respect to the roll axis (x) and possibly also with respect to the pitch axis (y), the angular velocity being measured by at least one turning-rate sensor (DRSx, DRSy).

2. Method according to Claim 1, characterized in that a criterion for the detection of overturning is derived solely from the angular velocity measured by the turning-rate sensor (DRSx, DRSy) if there are no measured values from the acceleration sensors (Bx, By, Bz).

3. Method according to Claim 1, characterized in that projections (B1') of the acceleration vector (B1) in a plurality of directions (R1, R2, R3) are calculated, in that each projection (B1') of the acceleration vector (B1) is integrated twice, and in that, if one of the projections (B1') integrated twice exceeds a directionally dependent threshold (Sn1), overturning is signalled.

4. Method according to Claim 3, characterized in that the projections (B1') of the acceleration vector (B1) are limited to limit acceleration values above which there is no acceleration of the vehicle (FZ) leading to overturning.

5. Method according to Claim 3, characterized in that the signals resulting from the first and/or second integration of the projections (B1') of the acceleration vector (B1) are limited to values above which overturning of the vehicle (FZ) does not occur.

6. Arrangement for detecting overturning of a vehicle, which arrangement has acceleration sensors (Bx, By, Bz) for measuring the accelerations of the vehicle (FZ) in the directions of its yaw axis (z), its roll axis (x) and its pitch axis (y) and has at least one turning-rate sensor (DRSx, DRSy), which measures the angular velocity of the vehicle (FZ) with respect to its roll axis (x) and possibly also with respect to its pitch axis (y), characterized in that means are provided which calculate an acceleration vector (B1) from the three measured acceleration values and signal overturning if the amount of angular deviation of the acceleration vector (B1) relative to the gravitational-acceleration vector (B0) in the equilibrium position of the vehicle (FZ) exceeds a predeterminable limit value, and in that the means predetermine a limit value which is the lower, the greater is the angular velocity measured by the turning-rate sensor (DRSx, DRSy).

7. Arrangement according to Claim 6, characterized in that means are provided which calculate an acceleration vector (B1) from the three measured acceleration values and signal overturning if the amount of angular deviation of the acceleration vector (B1) relative to the gravitational-acceleration vector (B0) in the equilibrium position of the vehicle (FZ) exceeds a predeterminable limit value, and in that the means predetermine a limit value which is the lower, the greater is the angular velocity measured by the turning-rate sensor (DRSx, DRSy).

## Revendications

1. Procédé de détection d'un capotage de véhicule,
caractérisé en ce qu'
- on mesure les accélérations du véhicule (FZ) dans les directions de son axe de giration (z), de son axe de roulis (x) et de son axe de tangage (y) à l'aide de capteurs d'accélération (Bx, By, Bz),
- on calcule un vecteur d'accélération résultant (B1) à partir des trois valeurs d'accélération mesurées,
- si le décalage angulaire entre le vecteur d'accélération (B1) et le vecteur d'accélération (B0) en position de repos du véhicule (FZ), dépasse une valeur limite prédéterminée, on signale un capotage, et
- pour le décalage angulaire du vecteur d'accélération (B1) on fixe une valeur limite d'autant plus faible que la vitesse angulaire mesurée par au moins un capteur de vitesse angulaire (DRSx, DRSy) par rapport à l'axe de roulis (x) ou éventuellement en outre par rapport à l'axe de tangage (y), augmente.

2. Procédé selon la revendication 1,
caractérisé en ce qu'
uniquement à partir de la vitesse angulaire mesurée par le capteur de vitesse de rotation (DRSx, DRSy), on déduit un critère pour reconnaître un capotage au cas où il n'y a pas de valeur de mesure des capteurs d'accélération (Bx, By, Bz).

3. Procédé selon la revendication 1,
caractérisé en ce qu'
- on calcule les projections (B1') du vecteur d'accélération (B1) dans plusieurs directions (R1, R2, R3),
- on intègre deux fois chaque projection (B1') du vecteur d'accélération (B1) et si l'une des projections (B1') intégrée deux fois, dépasse un seuil (Sn1) dépendant de la direction, on signale un capotage.

4. Procédé selon la revendication 3,
caractérisé en ce que
les projections (B1') du vecteur d'accélération (B1) sont limitées à des valeurs limites d'accélération au-dessus desquelles il n'y a pas d'accélération du véhicule (FZ) conduisant à un débattement.

5. Procédé selon la revendication 3,
caractérisé en ce que
les signaux résultants de la première et/ou de la seconde intégration des projections (B1') du vecteur d'accélération (B1), sont limités à des valeurs au-delà desquelles il n'y aura pas de capotage du véhicule (FZ).

6. Dispositif pour détecter un capotage de véhicule, comportant des capteurs d'accélération (Bx, By, Bz) pour mesurer les accélérations du véhicule (FZ) dans les trois directions, à savoir son axe de giration (z), son axe de roulis (x) et son axe de tangage (y), et au moins un capteur de vitesse de rotation (DRSx, DRSy) mesurant la vitesse angulaire du véhicule (FZ) par rapport à son axe de roulis (x) ou éventuellement par rapport à son axe de tangage (y),
caractérisé par
- des moyens qui calculent un vecteur d'accélération (B1) à partir des trois valeurs mesurées du vecteur d'accélération, et si le décalage angulaire du vecteur d'accélération (B1) par rapport au vecteur d'accélération terrestre (B0) en position de repos du véhicule (FZ), dépasse un seuil prédéterminé, on signale un capotage, et
- des moyens prévoient une valeur limite d'autant plus faible que la vitesse angulaire mesurée par le capteur de vitesse de rotation (DRSx, DRSy) est grande.

7. Dispositif selon la revendication 6,
caractérisé par
des moyens qui calculent un vecteur d'accélération (B1) à partir des trois valeurs d'accélération mesurées et si le décalage angulaire du vecteur d'accélération (B1) par rapport au vecteur d'accélération terrestre (B0) en position de repos du véhicule (FZ) dépasse une valeur limite prédéterminée, ils signalent un capotage, des moyens étant prévus pour définir une valeur limite d'autant plus faible que la vitesse angulaire mesurée par le capteur de vitesse angulaire (DRSx, DRSy) est grande.
